# NEUE EUROPÄISCHE PATENTSCHRIFT

(11) **EP 1 117 933 B2**
(45) Veröffentlichungstag und Bekanntmachung des Hinweises auf die Entscheidung über den Einspruch: **17.04.2013**
(45) Hinweis auf die Patenterteilung: 14.04.2004
(21) Anmeldenummer: 99947419.0
(22) Anmeldetag: 24.09.1999
(51) Int. Cl.: F04C 18/344, F04C 29/00

(54) **VAKUUMPUMPE**
VACUUM PUMP
POMPE A VIDE

(30) Priorität: 30.09.1998 DE 29823809 U
(43) Veröffentlichungstag der Anmeldung: 25.07.2001
(60) Teilanmeldung: 03016590.6
(73) Patentinhaber: ixetic Hückeswagen GmbH, 42499 Hückeswagen (DE)
(72) Erfinder: OTTO, Dieter, D-58256 Ennepetal (DE)
(74) Vertreter: Wallinger, Michael
(86) Internationale Anmeldenummer: PCT/EP1999/007111
(87) Internationale Veröffentlichungsnummer: WO 2000/019104

(56) Entgegenhaltungen:
- EP-B1- 0 320 795
- DE-A- 2 622 164
- DE-A- 19 834 033
- DE-A1- 19 519 841
- DE-A1- 19 539 136
- JP-U- H0 519 717
- US-A- 5 100 308
- US-A- 5 181 843
- PATENT ABSTRACTS OF JAPAN vol. 010, no. 349 (M-538), 26. November 1986 (1986-11-26) -& JP 61 149594 A (MAZDA MOTOR CORP), 8. Juli 1986 (1986-07-08)
- PATENT ABSTRACTS OF JAPAN vol. 016, no. 452 (M-1313), 21. September 1992 (1992-09-21) -& JP 04 159483 A (KOOKEN:KK), 2. Juni 1992 (1992-06-02)
- PATENT ABSTRACTS OF JAPAN vol. 009, no. 242 (M-417), 28. September 1985 (1985-09-28) & JP 60 095198 A (MATSUSHITA DENKI SANGYO KK), 28. Mai 1985 (1985-05-28)
- PATENT ABSTRACTS OF JAPAN vol. 009, no. 003 (M-349), 9. Januar 1985 (1985-01-09) -& JP 59 155595 A (MATSUSHITA DENKI SANGYO KK), 4. September 1984 (1984-09-04)

## Beschreibung

Die Erfindung betrifft eine Vakuumpumpe, insbesondere für Bremskraftverstärker-Anlagen in Kraftfahrzeugen, gemäß Oberbegriff des Anspruchs 1.

Vakuumpumpen der hier angesprochenen Art sind bekannt z.B. vom DE-A-2 622 164. Sie weisen einen aus Metall, meist aus Sintermetall bestehenden Rotor auf, der von einer Antriebswelle in Rotation versetzbar ist. Der in einem Gehäuse angeordnete Rotor steht mit einem Flügel in Eingriff, der an einem Konturring entlanggleitet. Der Rotor besteht aus mehreren Einzelteilen, die lösbar miteinander verbunden sind. Es hat sich gezeigt, daß der Rotor aufgrund seines Gewichts ein großes Massenträgheitsmoment aufweist, wodurch die Leistungsaufnahme der Vakuumpumpe unerwünscht hoch ist. Der Rotor weist ferner eine massive und aufwendige Bauweise auf.

Es ist daher Aufgabe der Erfindung, eine Vakuumpumpe der eingangs genannten Art zu schaffen, die diese Nachteile nicht aufweist.

Zur Lösung dieser Aufgabe wird eine Vakuumpumpe vorgeschlagen, die die in Anspruch 1 genannten Merkmale aufweist. Der Rotor ist in einfacher und kostengünstiger Weise herstellbar, beispielsweise im Spritzgußverfahren, und weist im Vergleich zu den bekannten Rotoren ein geringeres Gewicht auf. Aufgrund der einstückigen Ausbildung des Rotors ist eine kompakte Bauweise möglich, so daß der Bauraum für die Vakuumpumpe verkleinert werden kann. Die Leistungsaufnahme der Vakuumpumpe ist aufgrund des kleinen Massenträgheitsmoments des Rotors relativ gering.

Es wird ein Ausführungsbeispiel der Vakuumpumpe bevorzugt, bei dem der Rotor mindestens einen randoffenen Hohlraum aufweist. Bei der bevorzugten Herstellung des Rotors im Spritzgußverfahren kann der Hohlraum beziehungsweise die Hohlräume in einfacher Weise durch das Einlegen entsprechend ausgebildeter Kerne in das Spritzgußwerkzeug hergestellt werden. Durch das Einbringen von Hohlräumen in den Rotor können dünne Wandungen, beispielsweise nach außen hin und zu einem Schlitz, in dem der Flügel verlagerbar ist, realisiert werden. Ferner kann das Gewicht des ohnehin leichten, weil aus Kunststoff bestehenden Rotors weiter verringert werden.

Bevorzugt wird auch ein Ausführungsbeispiel der Vakuumpumpe, das sich dadurch auszeichnet, daß der Wandstärkenverlauf des Rotors stetig oder im wesentlichen stetig ist. Das heißt, der Übergang zwischen zwei eine unterschiedliche Dicke aufweisenden Wandbereiche ist gleichmäßig und weist keine deutlichen Wandstärkensprünge auf.

Auch wird ein Ausführungsbeispiel der Vakuumpumpe bevorzugt, bei dem der Rotor mindestens zwei nebeneinander angeordnete Hohlräume aufweist, die durch eine Rippe voneinander getrennt sind. Die Formsteifigkeit des Rotors wird durch die Verrippung weiter erhöht. Die zwischen zwei Hohlräumen gebildete Rippe ist vorzugsweise dünner als die anderen Wandungen des Rotors. Hierdurch werden Einfallstellen im Übergangsbereich der Rippe und einer Wandung des Rotors vermieden. Die Dicke der Rippe beziehungsweise der Rippen liegt bei einem bevorzugten Ausführungsbeispiel im Bereich von 1,0 mm bis 2,0 mm, während die Wandungsdicken des Rotors im Vergleich dazu dann vorzugsweise im Bereich von 1,5 mm bis 3,0 mm liegen.

Besonders bevorzugt wird auch eine Ausführungsform der Vakuumpumpe, die sich dadurch auszeichnet, daß der Rotor mindestens eine quer oder im wesentlichen quer zur Längsmittelachse des Rotors verlaufende geschlossene Wand aufweist. Dadurch kann sichergestellt werden, daß bei einem Hohlräume aufweisenden Rotor keine Luft von der Antriebsseite durch den Rotor in die Vakuumpumpe gelangen kann. Es sind also keine zusätzlichen Dichtungen notwendig.

Nach einer Weiterbildung der Erfindung ist vorgesehen, daß der Rotor mit Hilfe der Brennkraftmaschine eines Kraftfahrzeugs antreibbar ist. Bei einem anderen Ausführungsbeispiel der Vakuumpumpe ist der Rotor durch einen Motor, insbesondere Elektromotor, antreibbar, auch dann, wenn die Vakuumpumpe in einem Kraftfahrzeug eingesetzt ist, beispielsweise im Zusammenhang mit einer Bremskraftverstärker-Anlage des Kraftfahrzeugs. Der Motor kann beispielsweise auch hydraulisch oder pneumatisch betrieben sein. Bei einer weiteren Ausführungsvariante ist der Rotor wahlweise von der Brennkraftmaschine oder dem Motor antreibbar.

Weitere vorteilhafte Ausgestaltungen ergeben sich aus den übrigen Unteransprüchen.

Die Erfindung wird im folgenden anhand der Zeichnung näher erläutert. Es zeigen:
- Figur 1: drei Abbildungen eines ersten Ausführungsbeispiels eines einseitig gelagerten Rotors einer Vakuumpumpe;
- Figuren 2 bis 7: jeweils eine Seitenansicht und eine Stirnansicht weiterer Ausführungsbeispiele des Rotors;
- Figuren 8A und 8B: jeweils eine Draufsicht auf die dem Antrieb abgewandte Stirnseite weiterer Ausführungsbeispiele des Rotors;
- Figur 9: eine Seitenansicht eines weiteren Ausführungsbeispiels des Rotors;
- Figuren 10A bis 10C: jeweils eine Draufsicht auf die antriebsseitige Stirnseite von mehreren Ausführungsbeispielen eines über eine Kupplung angetriebenen Rotors die nicht erfindungsgemäß sind;
- Figur 11: eine Seitenansicht eines Rotors mit einem Antriebszapfen, der mit einer Kappe versehen ist;
- Figur 12: ein stark vergrößerter Ausschnitt des Rotors gemäß Figur 11 im Bereich des Antriebszapfens;

Allen im folgenden beschriebenen Ausführungsbeispielen des Rotors für eine Vakuumpumpe ist gemeinsam, daß dieser einstückig ausgebildet ist und aus Kunststoff besteht. Der Rotor ist in vorteilhafter Weise im Spritzgußverfahren herstellbar und weist ein nur geringes Gewicht auf.

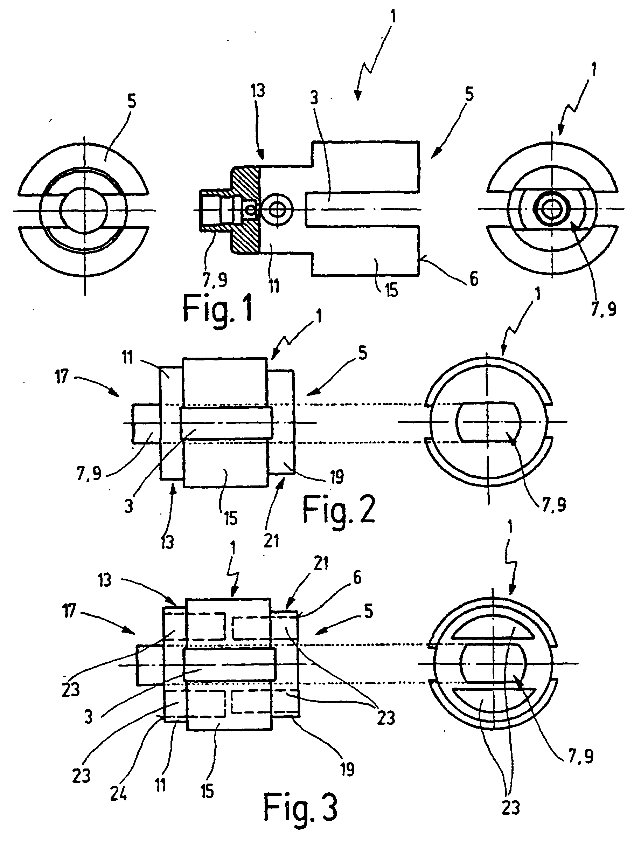

Figur 1 zeigt drei Abbildungen eines ersten Ausführungsbeispiels des Rotors 1 einer nicht dargestellten Vakuumpumpe, der mit einem durchgehenden Schlitz 3 versehen ist. Der Schlitz 3 dient zur Aufnahme eines nicht dargestellten Flügels, der innerhalb des Schlitzes 3 in Durchmesserrichtung verlagerbar ist. Der Schlitz 3 ist bei diesem Ausführungsbeispiel von der dem Antrieb des Rotors 1 abgewandten Stirnseite 5 aus in eine Stirnfläche 6 eingebracht, ist also randoffen ausgebildet. Als Antrieb dient üblicherweise eine mit einem Drehmoment beaufschlagbare Antriebswelle. Die Außenfläche des Rotors 1 ist zylindrisch ausgebildet.

Ein erster Längsabschnitt 7 des Rotors ist als Zweiflach 9 ausgebildet, an dem ein von der nicht dargestellten Antriebswelle übertragenes Drehmoment auf den Rotor 1 aufgebracht wird. An den ersten Längsabschnitt 7 schließt sich ein zweiter Längsabschnitt 11 an, der einen größeren Außendurchmesser aufweist, als der erste Längsabschnitt 7. Der zweite Längsabschnitt 11 dient als Lager 13 des hier fliegend gelagerten Rotors 1. Als Lagerungsart ist vorzugsweise eine Gleitlagerung vorgesehen. An das Lager 13 schließt sich ein durchmessergrößerer dritter Längsabschnitt 15 an, der -in radialer Richtung gesehen- vom Schlitz 3 für den Flügel durchbrochen ist.

Figur 2 zeigt eine Seitenansicht und eine Vorderansicht auf die antriebsseitige Stirnseite 17 eines weiteren Ausführungsbeispiels des Rotors 1, der zwei Lager aufweist. Auch bei der beidseitigen Lagerung des Rotors wird eine Gleitlagerung bevorzugt. Der zweite Längsabschnitt 11 des Rotors 1 bildet das erste Lager 13 und ein sich an den dritten Längsabschnitt 15 anschließender vierter Längsabschnitt 19 bildet das zweite Lager 21. Beide Lager 13, 21 weisen Durchmesser auf, die nur geringfügig, vorzugsweise 1 mm bis 5 mm, kleiner sind als der Durchmesser des Rotors im Bereich des Schlitzes 3 für den Flügel, der in dem dritten Längsabschnitt 15 eingebracht ist. Die Außendurchmesser der Lager 13 und 21 sind hier unterschiedlich und können bei einem anderen Ausführungsbeispiel auch identisch sein.

Die beidseitige Lagerung des Rotors 1 weist gegenüber der einseitigen Lagerung sowohl Funktionsvorteile als auch Vorteile bei der Herstellung auf. Die Funktionsvorteile bestehen darin, daß der Rotor nicht im Lager beziehungsweise den Lagern verkantet, wie es bei einem einseitig gelagerten Rotor bisweilen vorkommt. Des weiteren ist eine kompakte Bauform des Rotors realisierbar, weil beide Lager sehr kurz ausgeführt werden können. Ferner weist ein beidseitig gelagerter Rotor eine hohe Formstabilität auf. Aufgrund der hohen Formstabilität des Rotors können bei der Fertigung des Rotors enge Toleranzen eingehalten werden.

Figur 3 zeigt zwei Abbildungen eines weiteren Ausführungsbeispiels des Rotors 3, der sich von dem anhand der Figur 2 beschriebenen Rotor lediglich dadurch unterscheidet, daß zur Gewichtsreduzierung Hohlräume im Rotor vorgesehen sind. Auf der dem Antrieb zugewandten Stirnseite 17 des Rotors 1 sind in die Stirnfläche 24 des Lagers 13 und auf der dem Antrieb abgewandten Stirnseite 5 in die Stirnfläche 6 jeweils zwei Hohlräume 23 eingebracht, die einen kreisabschnittsförmigen Querschnitt aufweisen, wie aus der rechten Abbildung der Figur 3 ersichtlich. In der linken Abbildung der Figur 3 ist zu erkennen, daß sich die Hohlräume 23 bis in den mittleren Bereich des Rotors beziehungsweise des dritten Längsabschnitts 15 erstrecken. Der zwischen den gegenüberliegend angeordneten Hohlräumen stehengebliebene Wandbereich weist eine nur geringe Dicke auf. Ferner sind durch die Hohlräume Wandungen gebildet, zum Beispiel die Außenwand des Rotors im Bereich der Lager 13 und 21, die nur eine geringe Dicke aufweisen. Auch die Wandungen zwischen dem Schlitz 3 für den Flügel und den Hohlräumen sind relativ dünn. Die Form der Hohlräume ist variierbar und kann auch kreisrund oder oval sein. Wichtig ist, daß durch das Einbringen der Hohlräume dünne Wandungen geschaffen werden, so daß das Gewicht des Rotors reduziert wird. Der Übergang zwischen zwei Wandungen, die eine unterschiedliche Dicke aufweisen, ist vorzugsweise stufenlos.

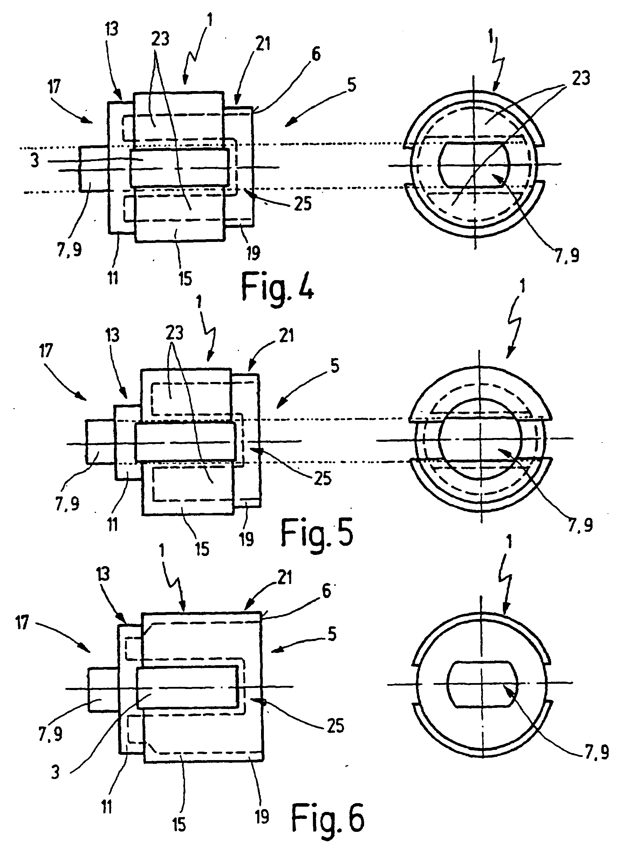

Figur 4 zeigt eine Seitenansicht und eine Draufsicht auf die antriebsseitige Stirnseite 17 eines weiteren Ausführungsbeispiels des Rotors, bei dem ausschließlich auf der dem Antrieb abgewandten Stirnseite 5 Hohlräume 23 eingebracht sind. In die Stirnfläche 6 ist eine kreisförmige Vertiefung 25 eingebracht, die sich in ihrem mittleren Bereich bis unmittelbar an den Schlitz 3 erstreckt. In den Grund der Vertiefung 25 sind kreisabschnittsförmige Hohlräume 23 eingebracht, die sich bis in den zweiten Längsabschnitt 11, also durch den gesamten Rotor bis hin zum ersten Lager 13, erstrecken. Allen Ausführungsbeispielen ist gemeinsam, daß wenn nur von einer Stirnseite aus Hohlräume in diesen eingebracht werden, die der Antriebsseite abgewandte Stirnseite 5 des Rotors bevorzugt wird .

Bei dem in Figur 5 dargestellten Ausführungsbeispiel des Rotors 1 weist das antriebsseitig angeordnete Lager 13 einen Durchmesser auf, der deutlich kleiner ist, als der Durchmesser des Rotors 1 im Bereich des Schlitzes 3, also im dritten Längsabschnitt 15. Es hat sich gezeigt, daß durch den kleinen Außendurchmesser des Lagers 13 ein kleiner Zentrierdurchmesser der Vakuumpumpe realisierbar ist. Das zweite, der Antriebsseite abgewandte Lager 21 ist hier im Durchmesser nur geringfügig kleiner als der Rotor 1 im Bereich des Flügels 3. Die Hohlräume 23 und die Vertiefung 25 sind auch hier von der Stirnseite 5 in den Rotor 1 eingebracht.

Figur 6 zeigt zwei Abbildungen eines weiteren Ausführungsbeispiels des Rotors, bei dem der Durchmesser des zweiten Lagers 21 und der des dritten Längsabschnitts 15, in dem der Schlitz 3 für den Flügel eingebracht ist, identisch ist. Der Vorteil hierbei ist, daß durch die auf der Stirnseite 5 in die Stirnfläche 6 eingebrachte Vertiefung 25 und die sich daran anschließenden Hohlräume 23 eine extrem dünne und technisch optimale Wandstärke im Außenbereich des Rotors möglich ist. Diese liegt bei einem aus Kunststoff bestehenden Rotor vorzugsweise in einem Bereich von 1,5 mm bis 3,0 mm. Selbstverständlich ist es auch möglich, daß beide Lager 13, 21 den gleichen Durchmesser wie der Rotor 1 im Flügelschlitzbereich aufweisen. Denkbar ist auch, daß nur das erste, antriebsseitig angeordnete Lager 13 den gleichen Durchmesser wie der Rotor im Bereich des den Schlitz 3 aufweisenden dritten Längsabschnitts 15 aufweist, während das zweite Lager 21 einen kleineren Durchmesser besitzt.

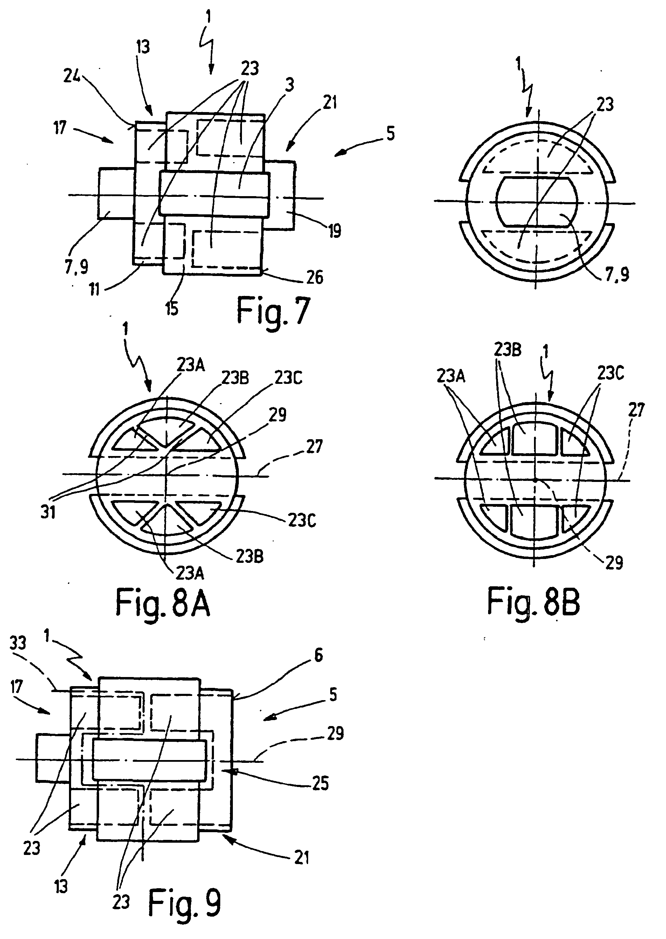

Bei dem in Figur 7 dargestellten Ausführungsbeispiel eines Rotors 1 weist das zweite Lager 21, das auf der dem Antrieb abgewandten Stirnseite 5 des Rotors 1 vorgesehen ist, einen Durchmesser auf, der wesentlich kleiner ist als der Durchmesser des Rotors 1 im Bereich seines dritten Längsabschnitts 15. Um dünne Wandungen zu schaffen, sind in die Stirnfläche 24 des zweiten Längsabschnitts 11 und in die Stirnfläche 26 des dritten Längsabschnitts 15 jeweils zwei Hohlräume 23 eingebracht, die -wie aus der rechten Abbildung der Figur 7 ersichtlicheinen kreisabschnittsförmigen Querschnitt aufweisen. Aufgrund dieser Ausgestaltung können in dem Bereich zwischen dem Rotoraußendurchmesser im Bereich des dritten Längsabschnitts 15 und im Bereich des zweiten Lagers 21 dünne Wandungen realisiert werden.

Figur 8A zeigt eine Vorderansicht auf die dem Antrieb abgewandten Stirnseite 5 eines Ausführungsbeispiels des Rotors 1, von der aus mehrere Hohlräume eingebracht sind. Der Rotor 1 ist symmetrisch zu einer Querachse 27 ausgebildet, die senkrecht zur Längsmittelachse 29 des Rotors 1 verläuft. Es werden im folgenden daher lediglich die Hohlräume oberhalb der Querachse 27 beschrieben. Die insgesamt drei Hohlräume 23A, 23B und 23C sind in einem geringen Abstand nebeneinander angeordnet. Der Hohlraum 23B ist von den Hohlräumen 23A und 23C jeweils durch eine Rippe 31 getrennt, die von einer Wandung des einstückig ausgebildeten Rotors 1 gebildet ist. Die Rippen 31 erhöhen die Formsteifigkeit des Rotors 1 und sind vorzugsweise dünner als die anderen Wandungen des Rotors, um Einfallsstellen, also Verjüngungen oder Einschnürungen, in den Wandbereichen zu vermeiden, in denen die Rippen in die übrigen Wandbereiche des Rotors 1 übergehen. Aufgrund der Anordnung und der Ausgestaltung der Hohlräume 23A bis 23C weisen diese gemeinsam eine Kreisabschnittsform auf, wobei aufgrund der V-förmigen Anordnung der Rippen 31 der mittlere Hohlraum 23B einen kreisausschnittsförmigen Querschnitt aufweist. Durch die Form der Hohlräume sind auch hier dünne Wandungen, insbesondere in den außenliegenden Bereichen des Rotors, realisiert.

Das in Figur 8B dargestellte Ausführungsbeispiel des Rotors 1 unterscheidet sich von dem anhand der Figur 8A beschriebenen lediglich dadurch, daß die Rippen 31 hier in einem Abstand und parallel zueinander angeordnet sind. Es wird deutlich, daß die Anordnung der Rippen variierbar ist und vorzugsweise in Abhängigkeit der geforderten Steifigkeitseigenschaften festgelegt wird.

Figur 9 zeigt eine Seitenansicht eines weiteren Ausführungsbeispiels des Rotors 1, von dessen Stirnseiten 17 und 5 aus Hohlräume 23 beziehungsweise eine Vertiefung 25 und sich daran anschließende Hohlräume 23 in die Lager 13 und 21 eingebracht sind. Die Hohlräume 23 erstrecken sich bis in den mittleren Bereich des Rotors. Der Rotor 1 weist eine gedachte, im wesentlichen quer zu seiner Längsmittelachse 29 verlaufende geschlossene Wand 33 auf, deren Verlauf mit gestrichelter Linie dargestellt ist. Die Wand 33 erstreckt sich -quer zur Längserstreckung des Rotors gesehen- über den gesamten Rotorquerschnitt und beinhaltet hier das erste, der Antriebsseite zugewandte Lager 13. Dadurch wird sichergestellt, daß trotz der Hohlräume 23 von der Antriebsseite keine Luft durch den Rotor 1 in die Vakuumpumpe gelangen kann.

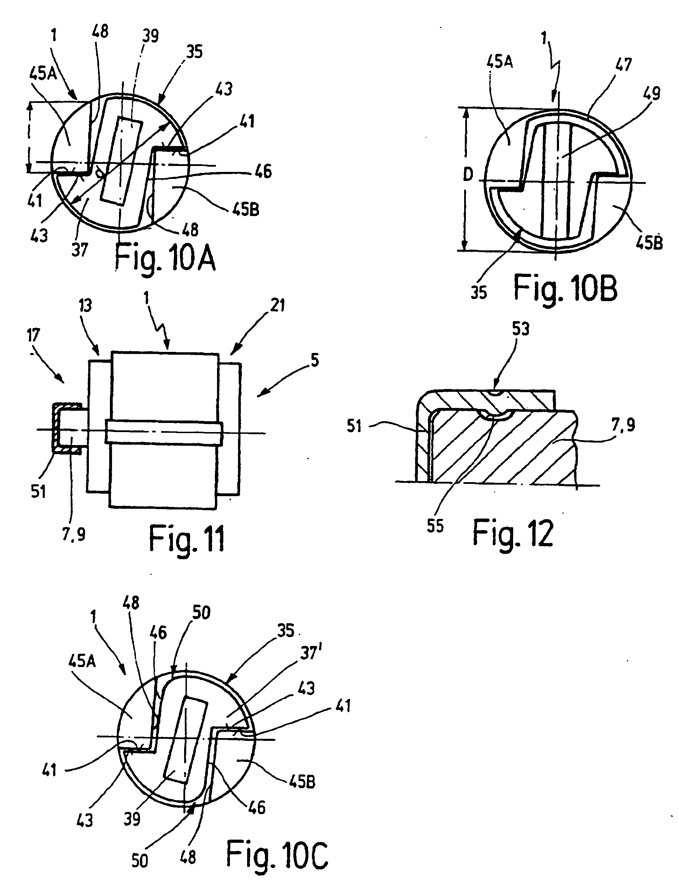

Allen Ausführungsbeispielen des Rotors 1 ist gemeinsam, daß der Rotor über eine Kupplung von der Antriebswelle in Rotation versetzt werden kann. Im folgenden werden anhand der Figuren 10A und 10B, die jeweils eine Draufsicht auf die der Antriebswelle zugewandten Stirnseite 17 zeigen, zwei Ausführungsbeispiele einer Kupplung näher beschrieben.

Die in Figur 10A dargestellte Kupplung 35 ist von einer Scheibe 37 gebildet, in deren mittleren Bereich ein rechteckiges Langloch 39 eingebracht ist, das die Scheibe 37 durchdringt. Das Langloch 39, in das die Antriebswelle mit einem entsprechend ausgebildeten Abschnitt eingreift, ermöglicht einen Ausgleich eines Achsversatzes zwischen der Vakuumpumpe und der Antriebswelle. Die Scheibe ist vorzugsweise derart ausgebildet, daß sie durch Stanzen hergestellt werden kann. Die einen kreisförmigen Querschnitt aufweisende Scheibe 37 weist zwei auf gegenüberliegenden Seiten in den Umfang eingebrachte Aussparungen auf, wodurch jeweils eine Auflagefläche 41 gebildet ist, die vorzugsweise -wie in Figur 10A dargestellt- eben ist. Zur Übertragung eines Drehmoments von einer Antriebswelle auf den Rotor 1 ist jede Auflagefläche 41 an einer am in Fig. 10A nicht erfindungsgemäß dargestellten Rotor 1 vorgesehenen Gegenfläche 43 andrückbar. Aus Figur 10A ist ersichtlich, daß die Form der Aussparung so gewählt ist, daß trotz kleinem Durchmesser d der Scheibe 37 die Anlageflächen zwischen dem Rotor 1 und der Kupplung groß sind. Aufgrund der großen Anlageflächen ist die Flächenpressung in diesen Bereichen klein, so daß auf ein Härten der Kupplung, falls diese aus Stahl oder Sintereisen besteht, gegebenenfalls verzichtet werden kann. Bei einem bevorzugten Ausführungsbeispiel ist vorgesehen, daß das Verhältnis zwischen der Dicke b und dem Durchmesser d der Scheibe 37 in einem Bereich von 0,1 ≤ b/d ≤ 0,3 liegt.

Die Gegenflächen 43 befinden sich an jeweils einem einstückig mit dem Rotor verbundenen Antriebssegment 45A beziehungsweise 45B, die über die Stirnfläche 24 des ersten Lagers 13 domartig hervorstehen. Der Abstand zwischen den Antriebssegmenten 45A, 45B sowie deren Form ist so gewählt, daß die Kupplung mit Spiel zwischen den Antriebssegmenten angeordnet und in einem kleinen Winkelbereich um ihre Längsmittelachse schwenkbar ist. Der Rotor 1 weist in seinem Antriebsbereich eine sehr stabile Form auf. Dies ist insbesondere dadurch möglich geworden, da hier eine sehr große Stützlänge 1 der Antriebssegmente 45A und 45 B in Kraftrichtung realisiert ist. So wird vorzugsweise ein Verhältnis zwischen der Stützlänge 1 und dem Durchmesser D des Rotors 1 realisiert, das in einem Bereich von 0,35 ≤ 1/D ≤ 0,65 liegt.

Bei dem in Figur 10B dargestellten Ausführungsbeispiel des Rotors sind die Antriebssegmente 45A, 45B durch einen geschlossenen Ring 47 miteinander verbunden, wodurch die Formsteifigkeit des Rotors 1 erhöht werden kann. Ferner kann der Ring 47 auch als Lager, insbesondere zur Gleitlagerung, für den Rotor benutzt werden. Diese Ausführungsform des Rotors baut in axialer Richtung sehr kompakt.

Bei der in Figur 10B dargestellten Ausführungsvariante der Kupplung 35 ist in deren mittleren Bereich anstelle eines Langlochs ein Zweiflach 49 vorgesehen, der in einen entsprechend ausgebildeten Schlitz in der Antriebswelle eingreift. Über den Zweiflach 49 wird das Drehmoment von der Antriebswelle auf die Kupplung übertragen.

Figur 10C zeigt eine Draufsicht auf die Stirnseite 17 des anhand von Figur 10A beschriebenen nicht erfindungsgemäß dargestellten Rotors 1 in einer weiteren Ausführungsform einer Kupplung 35, die von einer Scheibe 37' gebildet ist. Gleiche Teile sind mit gleichen Bezugszeichen versehen, so daß zu deren Beschreibung auf Figur 10A verwiesen wird. In den Umfang der Scheibe 37' sind zwei identische Aussparungen eingebracht, wodurch jeweils eine ebene Auflagefläche 41 und eine dazu rechtwinklig oder im wesentlichen rechtwinklig zur Auflagefläche 41 verlaufende Seitenwand 46 gebildet ist. Wie aus Figur 10C ersichtlich, sind bei anliegenden Auflageflächen 41 der Scheibe 37' an den Gegenflächen 43 des Rotors die Seitenwände 46 parallel zu einer in einem Abstand angeordneten Teilwand 48 des Antriebssegments 45A beziehungsweise 45B angeordnet, während bei dem in Figur 10A dargestellten Ausführungsbeispiel in dieser Stellung der Kupplung die Seitenwände 46 gegenüber den Teilwänden 48 der Antriebssegmente geneigt sind beziehungsweise mit diesen einen spitzen Winkel einschließen. Die Übergänge 50 zwischen den Seitenwänden 46 und der Umfangsfläche der Scheibe 37' sind bei diesem Ausführungsbeispiel abgerundet und weisen keine scharfen Kanten auf. Sollten im Betrieb der Vakuumpumpe Drehmomentschwingungen auftreten, wie sie zum Beispiel bei Direkteinspritzer-Motoren entstehen können, was zu einem Anschlagen der Scheibe 37' im Bereich ihrer Übergänge 50 an den Antriebssegmenten 45A, 45B führt, wird ein Beschädigen der Teilwände 80 der aus Kunststoff bestehenden Antriebssegmente vermieden.

Figur 11 zeigt ein anhand der vorangegangenen Figuren beschriebenes Ausführungsbeispiel des Rotors 1, der einen ersten, als Zweiflach 9 ausgebildeten Längsabschnitt 7 aufweist. Der zapfenförmige Zweiflach 9 ist mit einer topfförmigen, vorzugsweise aus Blech bestehenden Kappe 51 versehen, die auf den Zweiflach aufgepreßt oder aufgeklipst werden kann. Es ist auch möglich, daß die Kappe bereits beim Spritzen des Rotors in die Gußform eingelegt wird und somit bei der Herstellung des Rotors unlösbar mit diesem verbunden wird. Die Kappe 51 schützt den Zweiflach 9, dessen Festigkeit zum Übertragen des erforderlichen Drehmoments ausreicht, vor einem Verschleiß, der durch eine Relativbewegung zwischen dem Zweiflach und einer Kupplung hervorgerufen wird.

Figur 12 zeigt einen stark vergrößerten Ausschnitt der auf den ersten Längsabschnitt 7 aufgebrachten Kappe 51, die mindestens eine Druckstelle 53 aufweist, wodurch auf der Innenseite der Kappe 51 eine Vorwölbung gebildet ist, die in eine im Zweiflach des Rotors 7 eingebrachte Vertiefung 55 formschlüssig eingreift. Hierdurch kann die elastische und/oder aus einem elastischen Material bestehende Kappe 51 in einfacher Weise auf den Zweiflach 9 aufgeklipst werden.

Zusammenfassend bleibt festzuhalten, daß durch die Herstellung des Rotors aus Kunststoff die Kosten für die Vakuumpumpe deutlich verringert werden können. Der Kunststoffrotor weist gegenüber aus Metall bestehenden Rotoren nur ein geringes Gewicht auf, das durch das Einbringen von mindestens einem Hohlraum weiter verringert wird. Die Hohlräume können bei einem im Spritzgußverfahren hergestellten Rotor durch das Einlegen von Kernen in die Gußform gebildet oder nach der Herstellung des Rotors aus diesem spanend herausgearbeitet werden. Die Form, Ausgestaltung und die Anzahl der Hohlräume ist variierbar und wird beispielsweise durch das auf den Rotor aufbringbare Antriebsmoments festgelegt. Ferner kann jede Hohlräume aufweisende Ausführungsform des Rotors mit Versteifungsrippen 31 versehen sein, wie sie anhand der Figuren 8A und 8B beschrieben sind.

Da die Vakuumpumpe auch in Bereichen angeordnet werden kann, in denen hohe Temperaturen herrschen, zum Beispiel im Motorraum eines Kraftfahrzeugs, wird der Rotor bei einem bevorzugten Ausführungsbeispiel aus einem Kunststoff hergestellt, dessen Dauerfestigkeit vorzugsweise mindestens bis 80°C gewährleistet werden kann. Selbstverständlich können auch solche Kunststoffe Verwendung finden, die mindestens bis zu 140°C und darüber ihre Festigkeitseigenschaften, zumindest im wesentlichen, nicht verlieren.

## Patentansprüche

1. Vakuumpumpe mit einem antreibbaren Rotor (1), über den ein Flügel in einem Gehäuse in Rotation versetzbar ist, wobei der Rotor (1) aus Kunststoff besteht und einstückig ausgebildet ist, wobei am Rotor (1) jeweils eine Gegenfläche (43) für eine Auflagefläche (41) einer Kupplung vorgesehen ist, wobei über die Gegenfläche (43) ein von der Antriebswelle übertragenes Drehmoment in den Rotor (1) einleitbar ist,
**dadurch gekennzeichnet, dass**
zwischen dem Rotor (1) und der Kupplung eine Verschleißschutzeinrichtung (51) angeordnet ist, wobei
ein erster, vorzugsweise als Zweiflach (9) ausgebildeter Längsabschnitt (7) des Rotors (1) mit einer topfförmigen, vorzugsweise aus Blech bestehenden Kappe (51) versehen ist.

2. Vakuumpumpe nach Anspruch 1, **dadurch gekennzeichnet, dass** der vorzugsweise im Spritzgußverfahren hergestellte Rotor (1) mindestens einen randoffenen Hohlraum (23) aufweist.

3. Vakuumpumpe nach Anspruch 2, **dadurch gekennzeichnet, dass** der Hohlraum (23, 23A, 23B, 23C) vorzugsweise von der antriebsseitigen Stirnseite (17) des Rotors (1) oder von dessen dem Antrieb abgewandten Stirnseite (5) eingebracht ist.

4. Vakuumpumpe nach einem der vorhergehenden Ansprüche, **dadurch gekennzeichnet, dass**
die Wandungen des Rotors (1) eine geringe Dicke aufweisen.

5. Vakuumpumpe nach einem der vorhergehenden Ansprüche, **dadurch gekennzeichnet, dass**
der Übergang zwischen zwei eine unterschiedliche Dicke aufweisenden Wandbereichen des Rotors (1) stetig, vorzugsweise stufenlos, ist.

6. Vakuumpumpe nach einem der vorhergehenden Ansprüche, **dadurch gekennzeichnet, dass**
der Rotor (1) mindestens ein Lager (13,21) aufweist, dessen Durchmesser kleiner, vorzugsweise nur geringfügig kleiner ist, als der Rotordurchmesser im Bereich eines Schlitzes (3), in dem der Flügel verlagerbar ist.

7. Vakuumpumpe nach einem der vorhergehenden Ansprüche 1 bis 4, **dadurch gekennzeichnet, dass**
der Rotor (1) mindestens ein Lager (21) aufweist, dessen Durchmesser gleich groß ist, wie der Rotordurchmesser im Bereich eines Schlitzes (3), in dem der Flügel verlagerbar ist.

8. Vakuumpumpe nach einem der vorhergehenden Ansprüche, **dadurch gekennzeichnet, dass**
der Rotor (1) zwei Lager (13, 21) aufweist und dass der Durchmesser mindestens eines der Lager (21, 13) kleiner, vorzugsweise wesentlich kleiner, als der Rotordurchmesser im Bereich des Schlitzes (3) ist.

9. Vakuumpumpe nach einem der vorhergehenden Ansprüche, **dadurch gekennzeichnet, dass**
der Rotor (1) zwei Lager (13, 21) aufweist und dass der Durchmesser des Lagers (21) kleiner ist als der Durchmesser des Lagers (13).

10. Vakuumpumpe nach einem der vorhergehenden Ansprüche, **dadurch gekennzeichnet, dass**
der Rotor (1) mindestens zwei nebeneinander angeordnete Hohlräume (23A, 23B, 23C) aufweist, die durch eine Rippe (31) voneinander getrennt sind.

11. Vakuumpumpe nach einem der vorhergehenden Ansprüche, **dadurch gekennzeichnet, dass**
die Form der Hohlräume (23A, 238, 23C) oval ist.

12. Vakuumpumpe nach Anspruch 10, **dadurch gekennzeichnet, dass** die Rippe (31) dünner als die übrigen Wandbereiche des Rotors (1) ist.

13. Vakuumpumpe nach einem der vorhergehenden Ansprüche, **dadurch gekennzeichnet, dass**
der Rotor (1) mit Hilfe der Brennkraftmaschine eines Kraftfahrzeugs und/oder durch einen Motor, insbesondere Elektromotor, antreibbar ist.

## Claims

1. Vacuum pump comprising a rotor (1) which can be driven, by which a vane can be rotatably displaced within a housing, whereby the rotor (1) consists of plastic and is constructed as one piece, wherein the rotor (1) provides for one counter surface (43) for a supporting surface (41) of a coupling, whereby a torque that is transmitted by the drive shaft via the counter surface (43) can be routed into the rotor (1),
**characterised in that**
a wear protecting equipment is arranged between the rotor (1) and the coupling, whereas
a first length of a section (7) of the rotor (1) that is preferably shaped like a doubly flat piece (9) is equipped with a pot-shaped cap (51) preferably consisting of sheet metal.

2. Vacuum pump according to claim 1, **characterised in that** the rotor (1) which has preferably been constructed by an injection moulding process has at least one open-edged cavity (23).

3. Vacuum pump according to claim 2, **characterised in that** the cavity (23, 23A, 23B, 23C) is incorporated preferably from the facing surface (17) at the driving side of the rotor (1) or from the facing side (5) opposite to the drive.

4. Vacuum pump according to one of the preceding claims, **characterised in that** the walls of the rotor (1) have a small thickness.

5. Vacuum pump according to one of the preceding claims, **characterised in that** the transition between two wall areas of the rotor (1) with a different thickness is gradual, and preferably fluent.

6. Vacuum pump according to one of the preceding claims, **characterised in that** the rotor (1) has at least one bearing (13, 21), the diameter of which is smaller, and preferably only slightly smaller, than the diameter of the rotor in the area of a slot (3), in which the vane is displaceable.

7. Vacuum pump according to one of the preceding claims 1 to 4, **characterised in that** the rotor (1) has at least one bearing (21), the diameter of which is the same size as the diameter of the rotor in the area of a slot (3), in which the vane is displaceable.

8. Vacuum pump according to one of the preceding claims, **characterised in that** the rotor (1) has two bearings (13, 21), and **in that** the diameter of at least one of the bearings (21, 13) is smaller, and preferably substantially smaller, than the diameter of the rotor in the area of the slot (3).

9. Vacuum pump according to one of the preceding claims, **characterised in that** the rotor (1) has two bearings (13, 21), and **in that** the diameter of the bearing (21) is smaller than the diameter of the bearing (13).

10. Vacuum pump according to one of the preceding claims, **characterised in that** the rotor (1) has at least two cavities (23A, 23B, 23C) positioned adjacent to one another, which are separated from one another by a rib (31).

11. Vacuum pump according to one of the preceding claims, **characterised in that** the shape of the cavities (23A, 23B, 23C) is oval.

12. Vacuum pump according to claim 10, **characterised in that** the rib (31) is thinner than the remaining wall areas of the rotor (1).

13. Vacuum pump according to one of the preceding claims, **characterised in that** the rotor (1) can be driven with the aid of the combustion engine of a motor vehicle and/ or with a motor, and especially with an electric motor.

## Revendications

1. Pompe à vide comprenant un rotor (1) apte à être entraîné permettant de mettre en rotation une aile dans un carter, le rotor (1) étant en matière plastique et formé d'une seule pièce,
sur le rotor (1) une surface antagoniste (43) est prévue pour chaque surface d'appui (41) d'un accouplement, un couple de rotation transmis par l'arbre d'entraînement pouvant être appliqué au rotor (1) par l'intermédiaire de la surface antagoniste (43).
**caractérisée en ce qu'**
un équipement de protection contre l'usure (51) est arrangé entre le rotor (1) et l'accouplement,
une première partie longitudinale (7) du rotor (1), de préférence en forme de corps à deux plats opposés (9), étant munie d'un capot (51) en forme de pot de préférence réalisé en tôle.

2. Pompe à vide selon la revendication 1, **caractérisée en ce que** le rotor (1), de préférence fabriqué selon un procédé de coulée par injection, présente au moins un espace creux (23) à bordure ouverte.

3. Pompe à vide selon la revendication 2, **caractérisée en ce que** l'espace creux (23, 23A, 23B, 23C) est aménagé de préférence depuis la face frontale (17) côté entraînement du rotor (1) ou depuis la face frontale (5) de ce dernier opposée à l'entraînement.

4. Pompe à vide selon l'une quelconque des revendications précédentes, **caractérisée en ce que** les parois du rotor (1) présentent une faible épaisseur.

5. Pompe à vide selon l'une quelconque des revendications précédentes, **caractérisée en ce que** le passage entre deux zones de paroi du rotor (1) présentant des épaisseurs différentes est continu, de préférence progressif.

6. Pompe à vide selon l'une quelconque des revendications précédentes, **caractérisée en ce que** le rotor (1) présente au moins un palier (13, 21) dont le diamètre est plus petit, de préférence légèrement plus petit, que le diameter du rotor dans la zone d'une fente (3) dans laquelle l'aile est déplaçable.

7. Pompe à vide selon l'une des revendications 1 à 4 précédentes, **caractérisée en ce que** le rotor (1) présente au moins un palier (21) dont le diamètre est identique au diamètre du rotor dans la zone d'une fente (3) dans laquelle l'aile est déplaçable.

8. Pompe à vide selon l'une quelconque des revendications précédentes, **caractérisée en ce que** le rotor (1) présente deux paliers (13, 21), et **en ce que** le diamètre d'au moins l'un des paliers (21, 13) est plus petit, de preference nettement plus petit, que le diamètre du rotor dans la zone de la fente (3).

9. Pompe à vide selon l'une quelconque des revendications précédentes, **caractérisée en ce que** le rotor (1) présente deux paliers (13, 21), et **en ce que** le diamètre du palier (21) est plus petit que le diamètre du palier (13).

10. Pompe à vide selon l'une quelconque des revendications précédentes, **caractérisée en ce que** le rotor (1) présente au moins deux espaces creux (23A, 23B, 23C) juxtaposés séparés l'un de l'autre par une nervure (31).

11. Pompe à vide selon l'une quelconque des revendications précédentes, **caractérisée en ce que** la forme des espaces creux (23A, 23B, 23C) est ovale.

12. Pompe à vide selon la revendication 10, **caractérisée en ce que** la nervure (31) est plus mince que les autres zones de paroi du rotor (1).

13. Pompe à vide selon l'une quelconque des revendications précédentes, **caractérisée en ce que** le rotor (1) peut être entraîné à l'aide d'un moteur à combustion interne d'un véhicule automobile et/ ou par un moteur, notamment un moteur électrique.
